# EUROPEAN PATENT APPLICATION

(11) **EP 2 078 697 A1**
(43) Date of publication of application: **15.07.2009**
(21) Application number: 08150104.1
(22) Date of filing: 08.01.2008
(51) Int. Cl.: C01D 7/10, C01D 7/12, C01D 7/32, B01D 61/44, C01D 1/38

(54) **Process for producing sodium carbonate and/or sodium bicarbonate from an ore mineral comprising sodium bicarbonate**

(71) Applicant: SOLVAY (Société Anonyme), 1050 Bruxelles (BE)
(72) Inventor: Detournay, Jean-Paul, 1200 Brussels (BE); Coustry, Francis M., 1652 Alsemberg (BE)
(74) Representative: Gilliard, Pierre

(57) **Abstract**

Process to produce sodium carbonate and/or sodium bicarbonate from an ore mineral comprising sodium bicarbonate according to which :
• a production solution comprising sodium carbonate is introduced into the less basic compartments of an electrodialyser comprising alternating less basic and more basic adjacent compartments separated from each other by cationic membranes, the more basic compartments being delimited by the anionic faces of bipolar membranes on one side and by the cationic membranes on the other side;
• a solution comprising sodium hydroxide is produced into the more basic compartments, by combination of the flux of sodium ions crossing the cationic membrane and the flux of hydroxyl ions crossing the anionic face of the bipolar membranes;
• the solution comprising sodium hydroxide is extracted from the more basic compartments of the electrodialyser and used to constitute a reaction solution;
• the reaction solution is put into contact with the mineral ore comprising sodium bicarbonate in order to form a solution comprising sodium carbonate;
• the solution comprising sodium carbonate is divided into a part which is used to constitute the production solution and a remaining part which constitutes a produced solution.

## Description

This invention relates to a process for producing sodium carbonate and/or sodium bicarbonate from an ore mineral comprising sodium bicarbonate, in particular from trona, nahcolite or from other mineral underground ores, rich in sodium bicarbonate values, such as Wegscheiderite or Decemite.

Nahcolite is an ore consisting primarily of sodium bicarbonate. There are for instance vast quantities of nahcolite in the Piceance Creek Basin in Northwestern Colorado, which deposits are in the form of beds and disseminated crystals in the Saline Zone of the Green River formation.

Trona ore is a mineral that contains about 90-95 % sodium sesquicarbonate (Na₂CO₃.NaHCO₃.2H₂O). A vast deposit of mineral trona is found in southwestern Wyoming near Green River. This deposit includes beds of trona and mixed trona and halite (rock salt or NaCl). By conservative estimates, the major trona beds contain about 75 billion metric tons of ore. The different beds overlap each other and are separated by layers of shale. The quality of the trona varies depending on its particular location in the stratum.

A typical analysis of the trona ore mined in Green River is as follows :

**TABLE 1**

| Constituent | Weight Percent |
|---|---|
| Na₂CO₃ | 43.6 |
| NaHCO₃ | 34.5 |
| H₂O (crystalline and free moisture) | 15.4 |
| NaCl | 0.01 |
| Na₂SO₄ | 0.01 |
| Fe₂O₃ | 0.14 |
| Insolubles | 6.3 |

The sodium sesquicarbonate found in trona ore is a complex salt that is soluble in water and dissolves to yield approximately 5 parts by weight sodium carbonate (Na₂CO₃) and 4 parts sodium bicarbonate (NaHCO₃), as shown in the above analysis. The trona ore is processed to remove the insoluble material, the organic matter and other impurities to recover the valuable alkali contained in the trona.

The most valuable alkali produced from trona is sodium carbonate. Sodium carbonate is one of the largest volume alkali commodities made in the United States. In 1992, trona-based sodium carbonate from Wyoming comprised about 90 % of the total U.S. soda ash production. Sodium carbonate finds major use in the glass-making industry and for the production of baking soda, detergents and paper products.

A common method to produce sodium carbonate from trona ore is known as the "monohydrate process". In that process, crushed trona ore is calcined (i.e., heated) into crude sodium carbonate which is then dissolved in water. The resulting water solution is purified and fed to a crystallizer where pure sodium carbonate monohydrate crystals are crystallized. The monohydrate crystals are separated from the mother liquor and then dried into anhydrous sodium carbonate. This process is however very energy intensive, mainly due to the calcination step, which requires the use of large quantities of coal, fuel, gas or mixtures thereof.

On the other side, sodium bicarbonate is a product with a wide range of interesting properties and a very wide range of applications from high tech ingredients for the pharma industry to the human food and animal feed, and to the use in flue gas treatment. In flue gas treatment sodium bicarbonate is most likely among the most efficient chemicals for the removal of a wide range of pollutants (most notably the acidic one), and its use is limited only by the competition of less efficient but much cheaper chemicals such as lime or even limestone.

The production of sodium bicarbonate is currently almost entirely made by the carbonation of sodium carbonate. In Europe, the carbonation is usually made in situ in the soda ash plants from CO₂ coproduced during the production of soda ash (mainly the CO₂ generation in the lime kilns). In USA, the carbonation is usually made in separate plants which purchase independently the soda ash and the CO₂ and combine them. Because of the nature of this most important process, the production cost of the sodium bicarbonate is even above the cost of the sodium carbonate.

Attempts to reduce the energy consumption for the production of sodium carbonate and bicarbonate have been made, by the use of electrodialytic methods. US 4636289 discloses a method for recovering sodium carbonate from trona and other mixtures of sodium carbonate and sodium bicarbonate. In US 4636289, sodium hydroxide is produced in electrodialytic cells and used to solution mine the mineral ore. However, this process requires the introduction of sodium sulfates into the acid compartments of the electrodialysers, which appears to be difficult to put into practice in a cost effective and efficient way.

The invention aims at producing sodium carbonate and/or sodium bicarbonate from ore minerals, in a simple, economical way, avoiding the large energy consumption of the known processes.

In consequence, the invention concerns a process to produce sodium carbonate and/or sodium bicarbonate from an ore mineral comprising sodium bicarbonate according to which :
- a production solution comprising sodium carbonate is introduced into the less basic compartments of an electrodialyser comprising alternating less basic and more basic adjacent compartments separated from each other by cationic membranes, the more basic compartments being delimited by the anionic faces of bipolar membranes on one side and by the cationic membranes on the other side;
- a solution comprising sodium hydroxide is produced into the more basic compartments, by combination of the flux of sodium ions crossing the cationic membrane and the flux of hydroxyl ions crossing the anionic face of the bipolar membranes;
- the solution comprising sodium hydroxide is extracted from the more basic compartments of the electrodialyser and used to constitute a reaction solution;
- the reaction solution is put into contact with the mineral ore comprising sodium bicarbonate in order to form a solution comprising sodium carbonate;
- the solution comprising sodium carbonate is divided into a part which is used to constitute the production solution and a remaining part which constitutes a produced solution.

A bipolar membrane is an ion exchange membrane comprising one cationic face - permeable for the cations and impermeable for the anions and an other anionic face - permeable for the anions and impermeable for the cations. Such membrane can be produced by the juxtaposition of two monopolar membranes. Under a sufficient electric field, and in aqueous solution, the only possible reaction is the splitting of water at the interface between the two monopolar membranes into H⁺ and OH⁻ which then cross respectively the cationic and anionic monopolar membrane and exit the membrane into the adjacent compartments. It is recommended that the bipolar membranes are produced by the process as described in the patent application WO 01/79335 in the name of SOLVAY, in particular as described in its claims.

In the process according to the invention, the electrodialyser contains at least two types of compartments and two types of membranes, cationic and bipolar. In some embodiments it can contain additional types of compartments and anionic membranes.

In a preferred embodiment of the process, the electodialyser comprises only two types of compartments and only cationic and bipolar membranes. In this embodiment, wherein the less basic and more basic compartments of the electrodialyser are separated by an alternation of cationic and bipolar membranes, each compartment is thus delimited on one side by a cationic membrane, and on the other side by a bipolar membrane.

In the process according to the invention, the sodium hydroxide reacts with the sodium bicarbonate contained in the mineral ore. The resulting sodium carbonate, thanks to its high solubility is easily solubilized from the ore, which allows to extract efficiently the sodium values of the mineral ore. The reaction solution comprises advantageously at most 120 g/kg, preferably at most 100 g/kg sodium hydroxide and at most 40 g/kg preferably 30 g/kg sodium carbonate. It is nevertheless preferable that the reaction solution comprises at least 40 g/kg, more preferably 50 g/kg sodium hydroxide.

Usually, the reaction solution will be made by mixing the solution comprising sodium hydroxide which is extracted from the more basic compartments with fresh water or recycle waters, in order to dilute it.

However, the solution comprising sodium hydroxide can be advantageously used as such to form the reaction solution and put directly into contact with the mineral ore. Depending on the particular circumstances, the output from the more basic compartments will have to be reintroduced in their input, in order to get the best sodium hydroxide concentration.

The control of the composition of the reaction solution allows to regulate the composition of the produced solution. It is advantageous that the produced solution comprises advantageously at least 200g/kg, preferably 250g/kg sodium carbonate.

In a recommended embodiment of the process according to the invention, at least part of the produced solution is evaporated in order to produce a suspension comprising sodium carbonate crystals, which are separated and valorized. The evaporation can be made as in the monohydrate process, preferably by using mechanical vapor recompression. The sodium carbonate monohydrate crystals are then preferably processed into dense soda ash.

In the process according to the invention, a production solution comprising sodium carbonate is introduced into the less basic compartments of the electrodialyser. Due to the flux of Na⁺ ions through the cationic membrane and an incoming flux of H⁺ions, at least part of the entering sodium carbonate is transformed into sodium bicarbonate, forming an output solution comprising sodium bicarbonate.

Depending on the concentrations in sodium carbonate and sodium bicarbonate of the first production solution, it can also happen in advantageous embodiments, that sodium bicarbonate is converted into carbon dioxide at the output of the less basic compartments of the cell. The carbon dioxide can then be reacted with sodium carbonate solutions at other stages of the process, in order to produce sodium bicarbonate crystals.

In a recommended embodiment of the process, a solution comprising sodium bicarbonate is extracted from the less basic compartments of the electrodialyser, this solution being afterwards cooled in order to produce a suspension comprising sodium bicarbonate crystals. The suspension is separated into sodium bicarbonate crystals to be valorized and a sodium bicarbonate mother liquor. The mother liquor is then preferably debicarbonated, in order to produce on one side a gas comprising CO₂ and on the other side a debicarbonated solution depleted in sodium bicarbonate and enriched in sodium carbonate. The debicarbonated solution contains preferably not more than 60 g/kg, more preferably 50 g/kg, most preferably 40 g/kg sodium bicarbonate. The debicarbonated solution can be mixed with the production solution and introduced into the electrodialyser. It can also be mixed with the produced solution in order to form the reaction solution. The debicarbonation can be performed by vapor or preferably by air stripping.

In order to produce a solution comprising sodium hydroxide into the more basic compartments of the electrodialyser, it is necessary to limit the flux of sodium bicarbonate which could be introduced into those compartments. In fact, the maximum flux of HC03- ions entering into the more basic compartments is limited by the flux of OH- ions and Na⁺ ions introduced into them through the bipolar and cationic membranes. The more basic compartments can be advantageously fed by introducing into them the debicarbonated solution produced in the recommended embodiment described just above. Alternatively, it can be fed by a diluted sodium carbonate solution, containing advantageously at least 20 g/kg sodium carbonate, but at most 70 g/kg, preferably at most 50 g/kg sodium carbonate.

In a preferred embodiment, the more basic compartments are not fed by any solution coming from the outside. In this embodiment, the more basic compartments contain only NaOH produced in situ into those compartments by combination of Na⁺ and OH⁻ ions (crossing the cationic membranes and the anionic faces of the bipolar membranes), the input flow to the compartments being taken from their output (recirculation), with only supply of water, if necessary. In a variant of this embodiment, even the supply of external water is avoided, the less basic compartments being only fed by water passing through the ion exchange membranes into them.

The process according to the invention can be run with only one electrodialyser. It is however possible to use several electrodialysers, the output from some of them being used as input for others.

For instance, in a recommended embodiment of the process according to the invention, the solution comprising sodium bicarbonate which is extracted from the less basic compartments of the electrodialyser is introduced into the less basic compartments of another electrodialyser. In this embodiment, it is preferable first to cool the solution comprising sodium bicarbonate extracted from the less basic compartments of the first electrodialyser and separate the sodium bicarbonate crystal which appears due to the cooling. The mother liquor is then introduced into the other electrodialyser. Additionally, in this embodiment, it is recommended that the concentration in sodium carbonate of the solution comprising sodium bicarbonate which is introduced into the other electrodialyser is sufficiently low so as to generate CO₂ gas into the less basic compartments of this other electrodialyser. Indeed, when all the sodium carbonate entering the less basic compartments has been transformed into sodium bicarbonate as a consequence of Na⁺ ions passing the cationic membranes, any additional flux of Na⁺ ions passing through those membranes has the consequence of destroying sodium bicarbonate into CO₂ and water. The generated CO₂ gas is then advantageously used to react with part of the sodium carbonate solution produced through the contact with the mineral ores, in order to produce sodium bicarbonate crystals. This reaction can be performed in gas - liquid contactors suitable for the carbonation of sodium carbonate solutions. Depending on the circumstances, the sodium carbonate solution can be first concentrated by any suitable means, before its carbonation.

According to the invention, the sodium hydroxide is produced in the electrodialyser out of a sodium carbonate solution and the sodium carbonate solution is in turn very simply obtained by using part of the solution produced by the reaction of the sodium hydroxide with the sodium bicarbonate part of the mineral ore. Different mineral ores can be utilized and the mineral ores can be put into contact with the reaction solution in very different ways, for instance in surface equipments using excavated mineral ores. The simplicity of this process allows to use it at large industrial scale. It is particularly interesting to introduce the reaction solution underground and put it into contact with subterranean mineral ore deposits. The solution comprising sodium carbonate is then formed underground and extracted by conventional solution mining techniques. This embodiment is suited to Trona, Nahcolite, Wegscheiderite or Decemite mineral underground ores. In a particularly preferred embodiment, the mineral ore comprising sodium bicarbonate is an underground trona or nahcolite ore mineral.

Depending on the circumstances, it can also be advantageous to mix part of the reaction solution with a solution comprising sodium bicarbonate already at hand, in order to convert at least part of the sodium bicarbonate into sodium carbonate.

The annexed figure illustrates a particular embodiment of the invention. A production solution 1 comprising sodium carbonate is introduced into the less basic compartments of an electrodialyser 2 comprising alternating less basic and more basic compartments. A solution 3 comprising sodium bicarbonate is extracted from the less basic compartments and a solution 4 comprising sodium hydroxide is extracted from the more basic compartments of the electrodialyser. The solution 3 is cooled in the crystallizer 5, resulting in sodium bicarbonate crystals 6 and a mother liquor 7. The mother liquor 7 is debicarbonated by air stripping in the contactor 8, resulting in CO₂ gas 9 and debicarbonated mother liquor 10, part of which (10') is sent back to the electrodialyser and part of which is mixed with the solution 4 comprising sodium hydroxide together with fresh water 11, to form the reaction solution 12. The reaction solution 12 is injected into a subterranean trona mine 13. A solution comprising sodium carbonate 14 is extracted from the trona mine. A produced solution 14' is taken out of this solution 14 and sent to an evaporator (not represented), wherein sodium carbonate monohydrate crystals are formed. Those crystals are thereafter valorized, for instance by transformation into dense soda ash. The remaining part of the solution 14 is sent to the electrodialyser, constituting after mixing with debicarbonated mother liquor 10' the production solution 1.

Details and particularities of the invention will appear from the description of the following example.

### Example

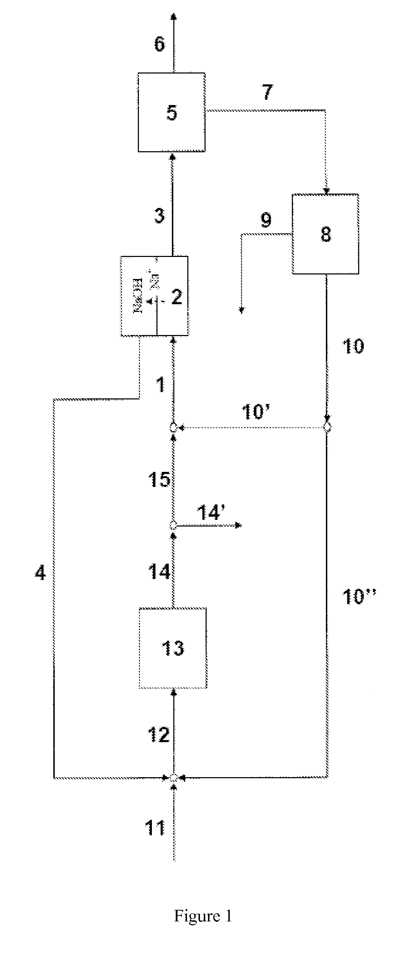

The process illustrated by the figure is operated in the following way. A quantity of 0,024 m³/h of a production solution comprising 110 g/kg sodium carbonate and 32 g/kg sodium bicarbonate is introduced at a temperature of 29°C into the less basic compartments of an electrodialyser. The electrodialyser comprise bipolar membranes produced by ASTOM, model NEOSEPTA BP-1E and cationic membranes NAFION^{®} 324, produced by DuPont. A current density of 1 kA/m² is applied to the elementary cell. A solution 3 comprising 117 g/kg sodium bicarbonate and 20 g/kg sodium carbonate at a temperature of 65°C is extracted from the less basic compartments of the electrodialyser at a flow rate of 0,023 m³/h. This solution is cooled to 30°C in a crystallizer, resulting in a production of 0,78 kg/h of sodium bicarbonate crystals. A solution 4 comprising 357 g/kg of sodium hydroxide is extracted from the more basic compartments of the electrodialyser at a flow rate of 0,002 m³/h and a temperature of 65°C. After mixing with 0,007 m³/h water and 0,003 m³/h debicarbonated mother liquor 10", a reaction solution comprising 68 g/kg NaOH and 27 g/kg Na₂CO₃ is introduced at a flow rate of 0,012 m³/h and at a temperature of 50°C into a trona mine comprising trona ore having the composition described in the introductory part of this specification, the temperature of the ore being approximately 25°C. A solution 14 comprising 280 g/kg Na₂CO₃ is extracted from the mine at a flow rate of 0,014 m³/h and a temperature of approximately 30°C. A part of 0,008 m³/h is subtracted from this solution 14 for evaporation and sodium carbonate crystallization.

The remaining flow rate is mixed with 0,02 m³/h of debicarbonated mother liquor 10' containing 50 g/kg sodium carbonate and 43 g/kg sodium bicarbonate.

## Claims

1. Process to produce sodium carbonate and/or sodium bicarbonate from an ore mineral comprising sodium bicarbonate according to which :
• a production solution comprising sodium carbonate is introduced into the less basic compartments of an electrodialyser comprising alternating less basic and more basic adjacent compartments separated from each other by cationic membranes, the more basic compartments being delimited by the anionic faces of bipolar membranes on one side and by the cationic membranes on the other side;
• a solution comprising sodium hydroxide is produced into the more basic compartments, by combination of the flux of sodium ions crossing the cationic membrane and the flux of hydroxyl ions crossing the anionic face of the bipolar membranes;
• the solution comprising sodium hydroxide is extracted from the more basic compartments of the electrodialyser and used to constitute a reaction solution;
• the reaction solution is put into contact with the mineral ore comprising sodium bicarbonate in order to form a solution comprising sodium carbonate;
• the solution comprising sodium carbonate is divided into a part which is used to constitute the production solution and a remaining part which constitutes a produced solution.

2. Process according to Claim 1, wherein the produced solution is evaporated in order to produce a suspension comprising sodium carbonate crystals, which are separated and valorized.

3. Process according to Claim 1 wherein a solution comprising sodium bicarbonate is extracted from the less basic compartments of the electrodialyser, this solution being afterwards cooled in order to produce a suspension comprising sodium bicarbonate crystals and the suspension being separated into valorized sodium bicarbonate crystals and a sodium bicarbonate mother liquor.

4. Process according to Claim 3 wherein the sodium bicarbonate mother liquor is debicarbonated and introduced into the less basic compartment of the electrodialyser

5. Process according to Claim 3, wherein the sodium bicarbonate mother liquor is debicarbonated and introduced into the more basic compartments of the electrodialyser.

6. Process according to Claim 3 wherein the mother liquor is introduced into the less basic compartments of another electrodialyser.

7. Process according to Claim 6 wherein the concentration in sodium carbonate of the mother liquor is sufficiently low so as to generate CO₂ gas into the less basic compartments of the other electrodialyser.

8. Process according to Claim 7 wherein the generated CO₂ is put into contact with at least part of the produced solution comprising sodium carbonate, in order to produce sodium bicarbonate crystals.

9. Process according to Claim 1 wherein part of the reaction solution comprising sodium hydroxide is mixed with a solution comprising sodium bicarbonate, in order to convert at least part of the sodium bicarbonate into sodium carbonate.

10. Process according to anyone of Claims 1 to 9, wherein the mineral ore comprising sodium bicarbonate is an underground trona or nahcolite ore mineral.
